# EUROPÄISCHE PATENTSCHRIFT

(11) **EP 2 189 757 B1**
(45) Veröffentlichungstag und Bekanntmachung des Hinweises auf die Patenterteilung: **09.01.2019**
(21) Anmeldenummer: 09176516.4
(22) Anmeldetag: 19.11.2009
(51) Int. Cl.: G01C 21/34, G08G 1/0968

(54) **Verfahren und Rechnereinheit zur Routenführung von Verkehrsteilnehmern**
Method and processing unit for route guidance of traffic participants
Procédé et ordinateur pour le guidage sur des routes des participants de la circulation routière

(30) Priorität: 21.11.2008 DE 102008058495
(43) Veröffentlichungstag der Anmeldung: 26.05.2010
(73) Patentinhaber: Vodafone GmbH, 40549 Düsseldorf (DE)
(72) Erfinder: Birle, Christian, 80799, München (DE)
(74) Vertreter: Müller & Schubert

(56) Entgegenhaltungen:
- DE-A1- 10 224 466
- DE-B3- 10 241 538
- JP-A- 9 022 497
- JP-A- 2002 099 982
- US-A1- 2005 015 197
- US-A1- 2007 299 599
- US-A1- 2008 270 019

## Beschreibung

Die vorliegende Erfindung betrifft ein Verfahren zur Routenführung von Verkehrsteilnehmern, die Mitglieder einer Verkehrssteilnehmergruppe sind, wobei die Verkehrsteilnehmer über ihnen zugeordnete elektronische Endgeräte zur Routenführung verfügen. Weiterhin betrifft die Erfindung eine Rechnereinheit eines Routenführungssystems zur Routenführung von Verkehrsteilnehmern.

Routenführung bzw. Routennavigation, insbesondere im Kraftfahrzeugbereich, ist vielfach bekannt. So werden über elektronische Endgeräte, insbesondere über Navigationsgeräte oder Mobiltelefone mit einer Navigationsfunktion, Routenführungen erstellt. Bei dieser individuellen Routenführung kann mittels bestimmter Optimierungskriterien eine gewünschte Route erstellt werden. D.h., je nach den Wünschen der Nutzer kann der schnellste, der kürzeste, der wirtschaftlichste oder der ökologischste Weg zwischen zwei Orten berechnet werden. Die jeweilige individuelle Optimierung unterliegt ausschließlich individuellen Kriterien. Es ist ferner bekannt, dass eine Alternativroute auf einem Navigationsgerät angezeigt wird, wenn ein Störfall, beispielsweise ein Stau oder eine Sperrung, auf einer berechneten Routenführung vorliegt. Dabei greift das Navigationsgerät in der Regel auf ein Verkehrsmodell mit aktuellen Verkehrsinformationen zurück. Die Navigationsgeräte bedienen sich zur automatischen Umfahrung von Staus und Behinderungen eines digitalen Radiodatendienstes bzw. Verkehrsfunks. Das heißt eine dynamische Zielführung ist nur bei Einschaltung eines Verkehrsfunks möglich.

Aus der DE 102 41 538 B3 ist ein Verfahren zur Routenführung von Verkehrsteilnehmern bekannt, wobei die Verkehrsteilnehmer über elektronische Endgeräte zur Routenführung verfügen, mit denen individuelle Routenanfragen an eine Rechnereinheit übertragen werden, in der Rechnereinheit anhand der individuellen Routenanfragen individuelle Routenführungen berechnet und den entsprechenden Endgeräten bereitgestellt werden, wobei die berechneten individuellen Routenführungen aller Routenanfragen in ein kollektives Verkehrsmodell integriert werden, das kollektive Verkehrsmodell zur Erkennung einer Störung oder Störungsgefahr auf der individuellen Routenführung ausgewertet wird und im Falle einer Störung wenigstens eine Alternativinformation zu der berechneten individuellen Routenführung erzeugt und dem Verkehrsteilnehmer auf dessen elektronisches Endgerät übertragen wird.

Aus der US 2007/0244627 A1 ist eine intelligentere Routenumleitung bekannt, bei der aktuelle Verkehrsinformationen mit historischen Verkehrsinformationen verbunden werden, um eine beste alternative Routenführung zu einer ersten Routenführung zu erstellen. Das heißt, durch das Zurückgreifen auf historische Verkehrsdaten können Prognosen für anstehende Verkehrsdichten getroffen werden.

Diese Prognosen beinhalten jedoch nur vage Schätzungen der kommenden Verkehrsdichte auf einer Routenführung, da keineswegs sicher ist, dass die gleichen Verkehrsereignisse sich wiederholen.

Ausgehend vom genannten Stand der Technik liegt der vorliegenden Erfindung die Aufgabe zu Grunde, ein Verfahren und eine Rechnereinheit zur Routenführung von Verkehrsteilnehmern zu schaffen, die es ermöglichen, dass die Prognosen über ein zukünftiges Verkehrsaufkommen auf einer berechneten Routenführung präziser werden. Insbesondere sollen das Verfahren und die Rechnereinheit ermöglichen, dass zumindest einer Teilmenge von Verkehrsteilnehmern eine sinnvolle alternative Routenführung und dieser Teilmenge an Verkehrsteilnehmern auch Anreize zum Befahren der alternativen Routenführung bereitgestellt werden.

Erfindungsgemäß wird diese Aufgabe durch ein Verfahren zur Routenführung von Verkehrsteilnehmern mit den Merkmalen gemäß dem unabhängigen Patentanspruch 1 sowie durch eine Rechnereinheit eines Routenführungssystems zur Routenführung von Verkehrsteilnehmern mit den Merkmalen gemäß dem unabhängigen Patentanspruch 8 gelöst. Weitere Merkmale und Details der Erfindung ergeben sich aus den Unteransprüchen und der Beschreibung. Dabei gelten Merkmale und Details, die im Zusammenhang mit dem erfindungsgemäßen Verfahren beschrieben sind, selbstverständlich auch im Zusammenhang mit der erfindungsgemäßen Rechnereinheit, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Verfahren zur Routenführung von Verkehrsteilnehmern, wobei die Verkehrsteilnehmer über ihnen zugeordnete elektronische Endgeräte zur Routenführung verfügen, gelöst. Dieses Verfahren ist durch folgende Schritte gekennzeichnet:
- über die elektronischen Endgeräte werden von den Verkehrsteilnehmern individuelle Routenanfragen oder Routen erzeugt und an eine Rechnereinheit übertragen,
- in der Rechnereinheit werden anhand individueller Routenanfragen für die entsprechenden Endgeräte individuelle Routenführungen berechnet und den entsprechenden Endgeräten bereitgestellt,
- diese berechneten individuellen Routenführungen und die Routen werden in der Rechnereinheit mit Daten aus einem erweiterten kollektiven Verkehrsmodell, auf das die Rechnereinheit zugreift, verglichen,
- wobei die berechneten individuellen Routenführungen aller Routenanfragen und alle erzeugten und an die Recheneinheit übertragenen Routen in das kollektive Verkehrsmodell integriert werden und dadurch ein erweitertes kollektives Verkehrsmodell erzeugt wird,
- in der Rechnereinheit wird das erweiterte kollektive Verkehrsmodell zur Erkennung einer Störung oder Störungsgefahr auf der individuellen Routenführung oder der Route eines jeden Verkehrsteilnehmers ausgewertet,
- und wird auf der individuellen Routenführung oder der Route eines Verkehrsteilnehmers ein bestimmtes Ereignis erkannt, wird in der Rechnereinheit wenigstens eine Alternativinformation zu der berechneten individuellen Routenführung oder der Route erzeugt und dem Verkehrsteilnehmer auf dessen elektronisches Endgerät übertragen.

Jeder Verkehrsteilnehmer verfügt über ein elektronisches Endgerät, beispielsweise ein Navigationsgerät, eine Mobiltelefon mit Navigationsfunktion, ein PDA mit Navigationsfunktion, etc..

Das Verfahren zur Routenführung von Verkehrsteilnehmern ist dadurch gekennzeichnet, dass über die elektronischen Endgeräte der Verkehrsteilnehmer von diesen individuelle Routenanfragen erzeugt und an eine Rechnereinheit übertragen werden. Das heißt, ein Verkehrsteilnehmer fordert von einer Rechnereinheit eine Routenführung zwischen einem ersten Ort und einem Zielort an. Alternativ dazu kann jeder Verkehrsteilnehmer eine Route in seinem ihm zugeordneten elektronischen Endgerät erzeugen und diese "fertige" Route an die Rechnereinheit übertragen. Die Rechnereinheit kann einen oder mehrere miteinander verknüpfte Rechner aufweisen. In der Rechnereinheit wird für jede Routenanfrage eine individuelle Routenführung berechnet und den entsprechenden Endgeräten bereitgestellt. Dabei werden die Wünsche der Verkehrsteilnehmer berücksichtigt. So wird bei der Berechnung der Routenführung berücksichtigt, ob der Verkehrsteilnehmer beispielsweise den schnellsten oder den kürzesten Weg wünscht. Bei der Berechnung einer Routenführung kann die Rechnereinheit auf das erweiterte kollektive Verkehrsmodell zurückgreifen. Die berechneten individuellen Routenführungen bzw. die Routen werden zusätzlich in der Rechnereinheit mit Daten aus einem kollektiven Verkehrsmodell bzw. einem erweiterten kollektiven Verkehrsmodell, auf das die Rechnereinheit zugreift, verglichen. Allerdings greift die Rechnereinheit auf ein erweitertes kollektives Verkehrsmodell zu, das dadurch gekennzeichnet ist, dass die berechneten individuellen Routenführungen aller Routenanfragen bzw. die Routen in das kollektive Verkehrsmodell integriert werden bzw. sind. Ein kollektives Verkehrsmodell greift beispielsweise auf eine simulierte Verkehrsinfrastruktur, auf aktuelle Verkehrssituationen und/oder auf historische Verkehrssituationen zurück. Durch die Erweiterung des kollektiven Verkehrsmodells um die berechneten individuellen Routenführungen aus allen Routenanfragen der Verkehrsteilnehmer sowie um die Routen, die von den Verkehrsteilnehmers selbst erzeugt worden sind, können nicht nur genauere aktuelle Routeninformationen, sondern insbesondere auch zukünftige Routeninformationen, beispielsweise Verkehrsdichten, berechnet und besser vorausgesagt werden. Dazu wertet die Rechnereinheit das erweiterte kollektive Verkehrsmodell zur Erkennung eines bestimmten Ereignisses auf der individuellen Routenführung oder der Route eines jeden Verkehrsteilnehmers aus. Ein bestimmtes Ereignis kann beispielsweise eine Störung oder Störungsgefahr, wie ein Stau oder eine Staugefahr, sein. Ferner kann ein bestimmtes Ereignis aber auch die Überschreitung einer Luftverschmutzungsgrenze, wie beispielsweise einer bestimmbaren Kohlenstoffdioxid-Grenze (CO₂-Grenze), einer bestimmbaren Stickstoff-Grenze oder einer bestimmbaren Feinstaubbelastung, sein. Weitere Kriterien für ein bestimmtes Ereignis können die Überschreitung eines bestimmten Kraftstoffverbrauchs oder einer bestimmten Reisezeit sein. So kann beispielsweise vorhergesehen werden, dass ein Verkehrsteilnehmer bei Befolgung der berechneten individuellen Routenführung oder der von ihm selbst erzeugten Route an einer Position/Stelle beziehungsweise an mehreren Positionen/Stellen entlang der Routenführung bzw. der Route in einen Stau geraten kann. Diese Vorhersage ist deshalb sehr präzise, da zusätzlich zu den aus dem normalen kollektiven Verkehrsmodell vorliegenden Informationen auch die Informationen über die Routenführungen und Routen sämtlicher anderer Verkehrsteilnehmer der Verkehrsteilnehmergruppe bei der Betrachtung des aktuellen und zukünftigen Verkehrsaufkommens berücksichtigt werden. So kann aufgrund der eingehenden Routen und der berechneten Routenführungen aller Verkehrsteilnehmer festgestellt werden, dass zu einem bestimmten Zeitpunkt eine bestimmte Menge der Verkehrsteilnehmer an einem bestimmen Ort zusammentreffen. Haben beispielsweise zweihundert Verkehrsteilnehmer in den Routenanfragen den gleichen Zielort eingegeben und ungefähr einen zum Zielort gleich weit entfernten Startort angegeben, so kann mit hoher Wahrscheinlichkeit gesagt werden, dass vor dem Erreichen des Zielortes eine Zusammenkunft einer Vielzahl dieser Fahrzeuge erfolgen wird. Ist dann noch aus aktuellen Verkehrssituationen oder aus historischen Verkehrssituationen des Verkehrsmodells bekannt, dass an dem Ort der Zusammenkunft beispielsweise ein Engpass, eine Baustelle oder einer Ampel vorhanden ist, so ist sicher mit einer Störung beziehungsweise Störungsgefahr in Form eines Staus zu rechnen. Als Auslöser für die Erzeugung einer Alternativinformation für den Teilnehmer, kann aber beispielsweise auch die Erkennung einer Überschreitung eines bestimmten Luftverschmutzungsgrenzwertes, wie eines CO₂-Grenzwertes, herangezogen werden. So kann es vorkommen, dass dem Teilnehmer ein Stau nicht stört, solange durch den Stau keine zu hohe Luftverschmutzung entsteht. Erkennt das erweiterte kollektive Verkehrsmodell, dass aufgrund des berechneten Verkehrsaufkommens die Gefahr einer erhöhten Luftverschmutzung sehr groß ist, teilt die Rechnereinheit dies dem Teilnehmer durch die Zusendung wenigstens einer Alternativinformation mit. D.h., die Rechnereinheit sendet Alternativinformationen entsprechend der Wünsche der Teilnehmer an die Teilnehmer.

Durch die Integrierung der berechneten individuellen Routenführungen und der Routen wird das kollektive Verkehrsmodell automatisch zu einem erweiterten kollektiven Verkehrsmodell, so dass die Rechnereinheit zur Berechnung einer individuellen Routenführung anfangs auf das kollektive Verkehrsmodell, danach auf das erweiterten kollektiven Verkehrsmodell zurückgreift. Die berechneten individuellen Routenführungen und die Routen werden in der Rechnereinheit mit Daten aus dem kollektiven Verkehrsmodell, auf das die Rechnereinheit zugreift, verglichen. Ist das kollektive Verkehrsmodell durch die berechneten individuellen Routenführungen und die Routen ergänzt worden, greift die Rechnereinheit bei der Berechnung einer neuen individuellen Routenführung auf das erweiterte kollektive Verkehrsmodell zurück.

Das Verfahren ist ferner dadurch gekennzeichnet, dass bei Erkennung einer Störung oder einer Störungsgefahr und/oder eines bestimmten Ereignisses auf der individuellen Routenführung oder der selbsterzeugten Route eines Verkehrsteilnehmers, in der Rechnereinheit wenigstens eine Alternativinformation zu der berechneten individuellen Routenführung bzw. der selbsterzeugten Route des Verkehrsteilnehmers erzeugt und dem Verkehrsteilnehmer auf dessen elektronisches Endgerät übertragen wird. Hierdurch erhält der Verkehrsteilnehmer die Möglichkeit frühzeitig auf eine mögliche Störungsgefahr zu reagieren. Der Verkehrsteilnehmer kann direkt eine alternative Route wählen, er kann aber auch aufgrund der erhaltenen Informationen die geplante Route erst später fahren, wenn das Verkehrsaufkommen geringer ist.

Die Rechnereinheit kann bei einer Feststellung eines Ereignisses, beispielsweise einer Störung bzw. einer Störungsgefahr, auf einer Route frühzeitig eine sogenannte Entzerrungsprozedur einleiten. D.h., die Rechnereinheit kann einem Verkehrsteilnehmer oder einigen der Verkehrsteilnehmern ein erste Alternativinformation zu den berechneten individuellen Routenführungen bzw. zu den selbsterzeugten Routen übertragen und anderen Verkehrsteilnehmern eine zweite, andere Alternativinformation zu deren berechneten individuellen Routenführungen bzw. zu den selbsterzeugten Routen zusenden. Hierdurch kann die Rechnereinheit im Vorfeld aufgrund der Auswertung des erweiterten kollektiven Verkehrsmodells dafür sorgen, dass das berechnete Ereignis nicht eintritt. Aufgrund der ermittelten Prognosen kann die Rechnereinheit jedem Verkehrsteilnehmer eine individuelle Alternative zu der gewünschten Routenanfrage bzw. der an die Rechnereinheit übertragene Route anbieten. Die Alternativinformation kann beispielsweise eine andere Route, einen Vorschlag einer späteren Fahrtantritts oder gar ein alternatives Ziel anbieten. Wünscht ein Verkehrsteilnehmer als Zielort beispielsweise einen Baumarkt, so kann die Rechnereinheit dem Verkehrsteilnehmer aufgrund der prognostizierten Staugefahr auf der Route zu dem Baumarkt, dem Verkehrsteilnehmer einen alternativen Baumarkt in der Gegend anbieten. So kann die Rechnereinheit durch Zugriff auf das erweiterte kollektive Verkehrsmodell feststellen, dass ein weiter vom Startort der individuellen Routenanfrage eines Verkehrsteilnehmers liegender Baumarkt schneller zu erreichen ist, als der eigentlich angestrebte Baumarkt, da die Rechnereinheit einfach feststellen kann, dass auf der Alternativroute keine Staugefahr besteht. Je nachdem wie viele Verkehrsteilnehmer den Alternativinformationen der Rechnereinheit folgen, nimmt die Rechnereinheit indirekt Einfluss auf die zukünftige Verkehrslage.

Durch die auf der Prognose basierende Alternativinformation kann ein Verkehrsteilnehmer schon zu Beginn seines Antritts der Route sich überlegen, was er tun möchte. Er kann somit reagieren, bevor es zu spät ist. Je früher der Verkehrsteilnehmer eine Alternativinformation zu seiner individuellen Routenführung bzw. seiner erzeugten Route erhält, desto besser kann er auf diese Information reagieren.

Bei einem derartigen Verfahren zu Routenführung von Verkehrsteilnehmern besteht eine dynamische Routenführung. D.h., die Rechnereinheit steuert nicht nur die Routenführungen der Verkehrsteilnehmer, sondern regelt aktiv das Verkehrsaufkommen. Durch die Erzeugung von Alternativinformationen zu den gewünschten individuellen Routenführungen bzw. den selbsterzeugten Routen kann die Rechnereinheit aktiv das Verkehrsaufkommen frühzeitig regeln. Insbesondere durch die Möglichkeit jeden Verkehrsteilnehmer bzw. mehreren Verkehrsteilnehmern unterschiedliche Alternativinformationen auf die elektronischen Endgeräte zu übertragen, kann eine wirksame Entzerrungsprozedur gestartet werden. Auch, wenn nicht jeder Verkehrsteilnehmer der Alternativinformation folgt, kann durch die angebotene Alternativinformation zu den jeweils berechneten Routenführungen bzw. den selbsterzeugten Routen zumindest eine geringe Entzerrung eines hohen Verkehrsaufkommens bereits im Vorfeld erfolgen.

Bevorzugt ist ein Verfahren, dass als Alternativinformation zu der berechneten individuellen Routenführung bzw. den selbsterzeugten Routen einem Verkehrsteilnehmer eine andere Routenführung, eine zeitliche versetzte Routenführung und/oder ein alternatives Ziel überträgt. Es ist auch möglich, dass die Rechnereinheit einem Verkehrsteilnehmer mehrere Alternativinformationen überträgt. So hat der Verkehrsteilnehmer eine Auswahl an Möglichkeiten und kann die für ihn günstigste auswählen. Je mehr Alternativinformationen einem jeden Verkehrsteilnehmer übertragen werden, desto größer ist die Wahrscheinlichkeit, dass nicht alle Verkehrsteilnehmer die gleiche alternative Route wählen.

Ferner ist ein Verfahren bevorzugt, bei dem die Verkehrssteilnehmer sich mittels ihrer elektronischen Endgeräte in der Rechnereinheit zur Teilnahme an dem Verfahren bei der Verkehrssteilnehmergruppe registrieren. Die Verkehrsteilnehmer können Mitglieder einer bestimmten Verkehrssteilnehmergruppe sein. Eine Verkehrssteilnehmergruppe, auch als Community bezeichnet, kann beispielsweise dadurch gekennzeichnet sein, dass alle Verkehrsteilnehmer der Verkehrssteilnehmergruppe auf Navigationsdaten eines Anbieters beziehungsweise eines Mobilfunkbetreibers zurückgreifen. So kann beispielsweise eine Verkehrssteilnehmergruppe über Navigationsgeräte eines Herstellers und darüber übertragene Navigationsdaten verfügen. Ferner kann eine Verkehrsteilnehmergruppe dadurch gebildet sein, dass die Routennavigation über ein und denselben Mobilfunkanbieter erfolgt. Es sind aber auch Gruppen innerhalb einer Verkehrssteilnehmergruppe denkbar. So kann eine derartige Untergruppe dadurch gebildet sein, dass diese Verkehrssteilnehmer immer die wirtschaftlichste oder ökologischste Routenführung erhalten möchten. Ferner kann eine Verkehrsteilnehmergruppe sich aus Verkehrsteilnehmern zusammensetzen, die alle die gleichen bestimmten Ziele verfolgen. So gibt es Verkehrsteilnehmer die bei Eintritt eines bestimmten Ereignisses, wie der Überschreitung einer bestimmten Luftverschmutzung, eine Alternativroute wünschen. Durch die Registrierung in einer Verkehrsteilnehmergruppe bestimmt jeder Verkehrsteilnehmer die Alternativinformationen. Mitglieder einer ersten Verkehrsteilnehmergruppe, denen wichtig ist so schnell wie möglich ans Ziel zu kommen, erhalten andere Alternativinformationen, als Mitglieder einer zweiten Verkehrsteilnehmergruppe, deren Ziel eine staufreie Fahrt ist.

Durch die Auswahl des elektronischen Endgerätes und/oder des Anbieters von derartigen Diensten kann jeder Verkehrsteilnehmer bestimmen, wie gut seine Routenführung ist. D.h., durch die Auswahl des am meisten genutzten Anbieters von Routenführungen kann der Verkehrsteilnehmer die Qualität des erweiterten kollektiven Verkehrsmodells bestimmen. Je mehr Verkehrsteilnehmer Routenanfragen stellen bzw. Routen erzeugen und übertragen, desto besser kann die Rechnereinheit Rückschlüsse bzw. Vorhersagen auf die Verkehrssituation tätigen. Sind nur ein paar Verkehrsteilnehmer bei der Rechnereinheit bzw. bei einer Verkehrsteilnehmergruppe registriert, so sind aufgrund der wenigen Routenanfragen keine bzw. eher schlechte Prognosen durchführbar. Fragen aber ein paar tausend Verkehrsteilnehmer in der Rechnereinheit eine Routenführung an bzw. übertragen eine selbsterzeugte Route, werden in der Rechnereinheit entsprechend viele Routenanfragen bzw. Routen bearbeitet, umso umfangreicher wird das erweiterte kollektive Verkehrsmodell und umso genauer ist die Erkennung einer Störung oder einer Störungsgefahr auf bestimmten Routen. Eine Verkehrsteilnehmergruppe kann beispielseise alle Teilnehmer eines Mobilfunkanbieters umfassen, die sich für das Verfahren registrieren lassen. Denkbar ist aber auch, dass verschiedene Anbieter von Navigationsdiensten bzw. Mobilfunkanbieter zu Durchführung des Verfahrens miteinander kooperieren. D.h., mehrere Anbieter können auf die Rechnereinheit zugreifen. So werden die Routenanfragen, die an verschiedene Anbieter gesendet werden, alle in einer Rechnereinheit gesammelt, ausgewertet und in das erweitere kollektive Verkehrsmodell integriert. Es können aber auch speziellere Verkehrsteilnehmergruppe gebildet werden. So kann eine Verkehrsteilnehmergruppe beispielsweise dadurch gebildet sein, dass in dieser alle Verkehrsteilnehmer immer die schnellste Route wünschen. Ferner können Verkehrsteilnehmergruppen sich dadurch auszeichnen, dass die Verkehrsteilnehmer der Gruppe immer die ökologisch günstigste Routenführung wünschen.

Die Alternativinformation kann den Verkehrssteilnehmern zugesendet werden, ohne dass diese ein Bestätigung oder Ähnliches zu der Rechnereinheit zurücksenden. Bevorzugt ist aber auch ein Verfahren, bei dem die Verkehrssteilnehmer zu der Rechnereinheit eine Akzeptierungsnachricht senden, in der sie angeben mit der Alternativinformation einverstanden zu sein. Sendet ein Verkehrssteilnehmer eine Akzeptierungsnachricht zu einer Alternativinformation, beispielsweise einer anderen Routenführung, zu der Rechnereinheit zurück, erhält diese wichtige Informationen, die wiederum in das erweiterte kollektive Verkehrsmodell aufgenommen werden können. Die Rechnereinheit erhält durch die Akzeptierungsnachricht das Vorhaben des jeweiligen Verkehrsteilnehmers. D.h., die Rechnereinheit weiß, dann, dass der Verkehrsteilnehmer die Route B oder einen späteren Fahrtantritt ausgewählt hat. Diese Information aus der Akzeptierungsnachricht wird in das erweiterte kollektive Verkehrsmodell aufgenommen und verändert dadurch die Prognose über die kommende Verkehrssituation. Die Akzeptierungsnachricht bezieht sich jeweils auf eine Alternativinformation. Sendet der Verkehrsteilnehmer eine Akzeptierungsnachricht zu einer Alternativroutenführung, erfährt die Rechnereinheit durch die Akzeptierungsnachricht, dass der Verkehrsteilnehmer die Alternativroutenführung ausgewählt hat.

Besonders bevorzugt ist ein Verfahren, bei dem in einem Bonussystem der Rechnereinheit einem Verkehrsteilnehmer bei Überschreitung einer bestimmbaren Anzahl an Akzeptierungsnachrichten ein Bonus zugewiesen wird. Die Rechnereinheit weist eine Auswerteeinheit auf, die die Anzahl der Akzeptierungsnachrichten jedes Verkehrsteilnehmers feststellen kann. So kann beispielsweise der Anbieter des Navigationssystems oder der Mobilfunkanbieter denjenigen Verkehrsteilnehmers, die mehrere Akzeptierungsnachrichten zurückgesendet haben, einen Bonus in Form von Gebührenermäßigungen oder besonderen Features zukommen lassen. Der Bonus kann aber auch darin bestehen, dass einem Verkehrsteilnehmer der das Verfahren zur Routenführung und insbesondere die Alternativinformationen nutzt, andere, bessere Alternativinformationen übertragen werden, als einem Verkehrsteilnehmer, der nie eine Akzeptierungsnachricht zurücksendet. Ferner ist denkbar, dass der Staat oder eine Gemeinde eine Art Steuervergünstigung denjenigen Verkehrsteilnehmern gewährt, die beispielsweise bei einer hohen Feinstaubbelastung auf einer Route, ein zum Auto alternatives Verkehrsmittel, wie eine Bahn, nutzt. Im Zusammenhang mit Straßennutzungsgebühren können beispielsweise Verkehrsteilnehmern, die einmal oder häufiger dem Vorschlag aus einer Alternativinformation folgen, die Straßennutzungsgebühren reduziert oder erlassen werden, da sie durch die Befolgung der Alternativinformation zu Entspannung der Verkehrssituation beigetragen haben.

Das kollektive Verkehrsmodell greift zur Berechnung der Routenführung auf eine simulierte Verkehrsinfrastruktur und/oder auf aktuelle Verkehrssituationen und/oder auf historische Verkehrssituationen zurück. Ferner greift das kollektive Verkehrsmodell auf die der Rechnereinheit übertragenen Routen zurück. Dabei können die aktuellen Verkehrssituationen verschiedenartig ermittelt werden. So können diese beispielsweise durch Informationen von Verkehrsteilnehmern, aber auch durch eine Überwachung der Routen mittels Kameras in das kollektive Verkehrsmodell einbezogen werden.

Vorzugsweise werden die individuellen Routenführungen und die zu der Rechnereinheit übertragenen Routen anonymisiert in der Rechnereinheit hinterlegt. Hierdurch können die Wege der Verkehrsteilnehmer nicht unbefugt nachverfolgt werden. Für das erweiterte kollektive Verkehrsmodell ist nur entscheidend, wann, von wo und wohin ein Verkehrsteilnehmer seine Fahrt aufnehmen will. Diese Daten reichen für die Erstellung einer aktuellen Verkehrssituation bzw. für eine Prognose der zukünftigen Verkehrslage aus. Der Name des Verkehrsteilnehmers spielt für das Verkehrsmodell keine Rolle. Nur für das Bonussystem kann es wichtig sein, dass der Verkehrsteilnehmer der Rechnereinheit bekannt ist. Mit berücksichtigt in das Verkehrsmodell könnte allerdings die Art des Kraftfahrzeuges werden. Dies ist insbesondere für die Schadstoffsituation bzw. die Schadstoffprognose auf einer Route interessant.

Gemäß dem zweiten Aspekt der Erfindung wird die Aufgabe durch eine Rechnereinheit eines Routenführungssystems zur Routenführung von Verkehrsteilnehmern, aufweisend eine Schnittstelle zum Empfang von individuellen Routenanfragen und von Routen, die von elektronischen Endgeräten der Verkehrsteilnehmer zu der Rechnereinheit übertragen werden, Mittel zum Berechnen von individuellen Routenführungen aufgrund der individuellen Routenanfragen, eine Schnittstelle zum Zugreifen auf ein kollektives Verkehrsmodell, Mittel zum Integrieren der berechneten individuellen Routenführungen aller Routenanfragen und der Routen in das kollektive Verkehrsmodell zur Erzeugung eines erweiterten kollektiven Verkehrsmodells, eine Komparatoreinrichtung zum Vergleich einer berechneten individuellen Routenführung oder einer Route mit Daten aus dem erweiterten kollektiven Verkehrsmodell, eine Auswerteinheit zur Auswertung des erweiterten kollektiven Verkehrsmodells zur Erkennung eines bestimmten Ereignisses auf der individuellen Routenführung oder der Route eines jeden Verkehrsteilnehmers, Mittel zur Erzeugung wenigstens einer Alternativinformation zu einer berechneten individuellen Routenführung oder zu der Route eines Verkehrsteilnehmers und Mittel zum Übertragen der wenigstens einen erzeugten Alternativinformation zu dem elektronischen Endgerät des Verkehrsteilnehmers, gelöst.

Die Rechnereinheit eines Routenführungssystems zur Routenführung von Verkehrsteilnehmern weist eine Schnittstelle, insbesondere ein Funkschnittstelle, zum Empfang von individuellen Routenanfragen und selbsterzeugten Routen eines Verkehrsteilnehmers auf. Über eine Schnittstelle zu einem kollektiven Verkehrsmodell greift die Rechnereinheit auf die dort vorliegenden Verkehrsinformationen zu. Die Rechnereinheit weist Mittel zum Berechnen von individuellen Routenführungen aufgrund der individuellen Routenanfragen eines jeden Verkehrsteilnehmers auf. Über die Integrationsmittel kann die Rechnereinheit ferner die berechneten individuellen Routenführungen aller Routenanfragen sowie die übertragenen Routen in das kollektive Verkehrsmodell integrieren. Durch die Integration der berechneten individuellen Routenführungen sowie der übertragenen Routen in das kollektive Verkehrsmodell wird ein erweitertes kollektives Verkehrsmodell erzeugt. Da die Routenführungen vieler Verkehrsteilnehmer in das Verkehrsmodell mit einbezogen werden, kann eine bessere Aussage über die aktuelle Verkehrssituation und insbesondere eine sehr gute Prognose über die kommende Verkehrslage getätigt werden. Des Weiteren weist die Rechnereinheit eine Komparatoreinrichtung auf. Diese Komparatoreinrichtung dient zur Erstellung eines Vergleiches einer berechneten individuellen Routenführung bzw. einer von einem Verkehrsteilnehmer erzeugten Route mit Daten aus dem erweiterten kollektiven Verkehrsmodell. Die Auswerteeinheit wertet das erweiterte kollektive Verkehrsmodell aus und erkennt, ob ein bestimmtes Ereignis, wie eine Störung oder eine Störungsgefahr, insbesondere eine Staugefahr, auf einer berechneten individuellen Routenführung oder einer selbsterzeugten Route eines Verkehrsteilnehmers vorliegt. Liegt kein Ereignis bzw. keine Störung, d.h. ein Stau, ein Baustelle, ein Sperrung oder ein erhöhtes Schadstoffaufkommen, auf einer berechneten individuellen Routenführung vor, so überträgt die Rechnereinheit keine zusätzliche Nachricht an den Verkehrsteilnehmer. Stellt die Rechnereinheit aufgrund der Auswertung des erweiterten kollektiven Verkehrsmodells fest, dass ein erhöhtes Verkehrsaufkommen vorliegt oder unmittelbar zu erwarten ist, erzeugen die Mittel zum Erzeugen wenigstens eine Alternativinformation zu einer berechneten individuellen Routenführung oder einer selbsterzeugten Route eines Verkehrsteilnehmers und über die Übertragungsmittel wird die wenigstens eine erzeugte Alternativinformation dem elektronischen Endgerät des Verkehrsteilnehmers übertragen. Hierdurch gibt die Rechnereinheit jedem Verkehrsteilnehmer eine Option, wie er sein Ziel am besten erreichen kann. Dabei kann die Alternativinformation eine alternative Routenführung zu dem gleichen Ziel, ein Vorschlag für einen verzögerten Fahrtantritt oder auch ein anderes Ziel sein.

Eine derartig ausgebildete Rechnereinheit eines Routenführungssystems zur Routenführung von Verkehrsteilnehmern kann bessere Vorschläge für Routen tätigen, als bekannte Systeme. Durch den zusätzlichen Zugriff auf die Routenführungen andere Teilnehmer können exaktere Verkehrslagen festgestellt und insbesondere bessere Prognosen für die kommende Verkehrslage auf eine Verkehrsnetz betätigt werden. Durch das zusätzliche Wissen, wann, wie viele Verkehrsteilnehmer auf bestimmten Routen fahren werden, können frühzeitig Konsequenzen gezogen werden, so dass gar nicht erst ein Stau entstehen kann. Insbesondere durch die Rückmeldung in Form von Akzeptierungsnachrichten der Verkehrsteilnehmer kann das erweiterte kollektive Verkehrsmodell ständig aktualisiert werden. Diese steuert damit die Verkehrslage nicht nur, sondere regelt diese auch. Durch die Akzeptierungsnachrichten findet ein sogenannter Regelungskreis statt. Die Rechnereinheit erhält vor Antritt der Fahrt eines jeden Verkehrsteilnehmers die Information, für welche Routenführung sich der Verkehrsteilnehmer entschieden hat und wann der die Fahrt antritt. Durch diese sehr exakten Informationen über das Verkehrsverhalten der Verkehrsteilnehmer weist das erweiterte kollektive Verkehrsmodell deutlich bessere Kenntnis über die zu erwartende Verkehrslage auf, als bekannte kollektive Verkehrsmodelle.

Bevorzugt weist die Rechnereinheit eine Registrierungseinrichtung zur Registrierung der Verkehrssteilnehmer bei der Rechnereinheit oder einer Verkehrssteilnehmergruppe der Rechnereinheit auf. Hierdurch weiß die Rechnereinheit, dass der Verkehrsteilnehmer an dem Dienst teilnimmt. Je nach Art der Routenfrage kann die Rechnereinheit dem Verkehrsteilnehmer dann individuelle Routenführungen anbieten. So können in der Routenanfrage bzw. der übertragenen Route Vorlieben des Verkehrsteilnehmers beinhaltet sein. Die Rechnereinheit sendet dem Verkehrsteilnehmer dann entsprechend seiner Vorlieben individuelle Routenführungen oder auch individuelle Alternativinformationen zu. Ferner kann ein Verkehrsteilnehmer durch die Registrierung eine bestimmten Verkehrsteilnehmergruppe beitreten, sie beispielsweise immer die kostengünstige Routenführung oder die ökologisch beste Routen berechnet bekommen möchte.

Ferner ist bevorzugt, wenn der Rechnereinheit ein Bonussystems zugeordnet ist, welches zur Erzeugung von Boni bei einem Empfang einer bestimmbaren Anzahl an Akzeptierungsnachrichten eines Verkehrsteilnehmers ausgebildet ist. Das Bonussystem greift auf die Auswerteeinheit der Rechnereinheit zu. Die Auswerteinheit stellt fest, wie häufig ein Verkehrsteilnehmer eine Akzeptierungsnachricht an die Rechnereinheit zurückgesendet hat. Hierüber erhält die Rechnereinheit die Information, wie und ob überhaupt die Verkehrsteilnehmer einer Alternativinformation Folge leisten. Über das Bonussystem können dem Verkehrsteilnehmer entsprechende Boni zugeteilt werden. Die kann in Form von Gebührenermäßigungen für die Nutzung des Verfahrens, aber auch andere Belohnungen, wie Steuervergünstigungen, Mautreduzierungen, etc., sein.

Durch die Erfindung werden individuelle und kollektive Routenführungen miteinander kombiniert und ein kollektiver Gesamtnutzen erzielt. Verkehrsteilnehmer, insbesondere einer bestimmten Verkehrsteilnehmergruppe, d.h. einer sogenannten Community, die ggf. einen Nachteil im Zuge der Gesamtoptimierung der Verkehrslage auf sich nehmen, können durch das Bonus-/Malussystem einen Ausgleich erzielen.

Eine individuelle Routennavigation kann mittels der Optimierungskriterien schnellste, kürzeste, wirtschaftlichste und/oder ökologischste Route betrieben werden. Je nach den Wünschen der Verkehrsteilnehmer, insbesondere der Registrierung in einer bestimmten Verkehrsteilnehmergruppe, können den Verkehrsteilnehmern unterschiedliche Routenführungen und auch Alternativen angeboten werden. Die individuelle Navigation wird durch die kollektive Komponente erweitert, deren Algorithmen zentral ablaufen und neben dem aktuellen Verkehrszustand auch Prognosen über den kommenden Verkehrszustand sowie aktuelle Schadstoffsituationen bzw. Prognosen über zu erwartende Schadstoffsituationen besitzen. Zum Beispiel kann sich ein Verkehrsteilnehmer in einer CO2-Community registrieren. Über das im zugeordnete Navigationsgerät oder die Navigation auf dem Mobiltelefon (beispielsweise über GPRS/UMTS-Modul) gibt der Verkehrsteilnehmer seine Reiseroute an die Rechnereinheit weiter und erfährt von dieser individuelle, mit Begründungen hinterlegte, Vorschläge von Routenführungen, die aufgrund der Betrachtung des erweiterten kollektiven Verkehrsmodells berechnet wurden. Das Prinzip dieser Routenführung funktioniert dadurch, dass beispielsweise durch die Umleitung von Verkehrsteilnehmern auf eine längere, jedoch nicht so stark befahrene Alternativroute ein Verkehrszusammenbruch auf der Hauptstrecke verhindert werden kann. Diejenigen Verkehrsteilnehmer, die den Empfehlungen in den übertragenen Alternativinformationen folgen, nehmen zum Teil unwissentlich zusätzliche Zeit- und Wegkosten auf sich und erzeugen dadurch nicht honorierten Allgemeinnutzen. Über die Registrierung bzw. den Verkehrsteilnehmergruppenansatz, d.h. den Communityansatz, wird dies bewusst gemacht und über das Bonussystem entsprechend honoriert. Dazu zählen auch der völlige Verzicht auf eine Fahrt oder der Wechsel des Fahrtmittels. Der Verkehrsteilnehmer kann durch eine Angabe seiner Personalien bei der Registrierung angeben, ob er generell bereit ist individuelle Nachteile zu akzeptieren, die dann entsprechend im Bonussystem honoriert werden.

## Patentansprüche

1. Verfahren zur Routenführung von Verkehrsteilnehmern, wobei die Verkehrsteilnehmer über ihnen zugeordnete elektronische Endgeräte zur Routenführung verfügen, mit folgenden Schritten:
- über die elektronischen Endgeräte werden von den Verkehrsteilnehmern individuelle Routenanfragen oder Routen erzeugt und an eine Rechnereinheit übertragen,
- in der Rechnereinheit werden anhand der individuellen Routenanfragen für die entsprechenden Endgeräte individuelle Routenführungen berechnet und den entsprechenden Endgeräten bereitgestellt,
- diese berechneten individuellen Routenführungen und die Routen werden in der Rechnereinheit mit Daten aus einem erweiterten kollektiven Verkehrsmodell, auf das die Rechnereinheit zugreift, verglichen,
- wobei die berechneten individuellen Routenführungen aller Routenanfragen und alle erzeugten und an die Rechnereinheit übertragenen Routen in ein kollektives Verkehrsmodell integriert werden und dadurch das erweiterte kollektive Verkehrsmodell erzeugt wird,
- in der Rechnereinheit wird das erweiterte kollektive Verkehrsmodell zur Erkennung einer Störung oder Störungsgefahr auf der individuellen Routenführung oder der Route eines jeden Verkehrsteilnehmers ausgewertet,
- und wird auf der individuellen Routenführung oder der Route eines Verkehrsteilnehmers ein bestimmtes Ereignis erkannt, wird in der Rechnereinheit wenigstens eine Alternativinformation zu der berechneten individuellen Routenführung oder der Route erzeugt und dem Verkehrsteilnehmer auf dessen elektronisches Endgerät übertragen.

2. Verfahren nach Anspruch 1, **dadurch gekennzeichnet, dass** als Alternativinformation zu der berechneten individuellen Routenführung oder zu der Route einem Verkehrsteilnehmer eine andere Routenführung, eine zeitliche versetzte Routenführung und/oder ein alternatives Ziel übertragen werden.

3. Verfahren nach Anspruch 1 oder 2, **dadurch gekennzeichnet, dass** die Verkehrssteilnehmer sich mittels ihrer elektronischen Endgeräte in der Rechnereinheit zur Teilnahme an dem Verfahren bei einer Verkehrssteilnehmergruppe registrieren.

4. Verfahren nach einem der Ansprüche 1 bis 3, **dadurch gekennzeichnet, dass** die Verkehrssteilnehmer zu der Rechnereinheit eine Akzeptierungsnachricht senden, in der sie angeben mit der Alternativinformation einverstanden zu sein.

5. Verfahren nach Anspruch 4, **dadurch gekennzeichnet, dass** in einem Bonussystem der Rechnereinheit einem Verkehrsteilnehmer bei Überschreitung einer bestimmbaren Anzahl an Akzeptierungsnachrichten ein Bonus zugewiesen wird.

6. Verfahren nach einem der Ansprüche 1 bis 5, **dadurch gekennzeichnet, dass** das kollektive Verkehrsmodell zur Berechnung der Routenführung auf eine simulierte Verkehrsinfrastruktur und/oder auf aktuelle Verkehrssituationen und/oder auf historische Verkehrssituationen zurückgreift.

7. Verfahren nach einem der Ansprüche 1 bis 6, **dadurch gekennzeichnet, dass** die individuellen Routenführungen und die Routen anonymisiert in der Rechnereinheit hinterlegt werden.

8. Rechnereinheit eines Routenführungssystems zur Routenführung von Verkehrsteilnehmern, aufweisend eine Schnittstelle zum Empfang von individuellen Routenanfragen und von Routen, die von elektronischen Endgeräten der Verkehrsteilnehmer zu der Rechnereinheit übertragen werden, Mittel zum Berechnen von individuellen Routenführungen aufgrund der individuellen Routenanfragen, eine Schnittstelle zum Zugreifen auf ein kollektives Verkehrsmodell, Mittel zum Integrieren der berechneten individuellen Routenführungen aller Routenanfragen und aller empfangenen Routen in das kollektive Verkehrsmodell zur Erzeugung eines erweiterten kollektiven Verkehrsmodells, eine Komparatoreinrichtung zum Vergleich einer berechneten individuellen Routenführung oder einer Route mit Daten aus dem erweiterten kollektiven Verkehrsmodell, eine Auswerteinheit zur Auswertung des erweiterten kollektiven Verkehrsmodells zur Erkennung eines bestimmten Ereignisses auf der individuellen Routenführung oder der Route eines jeden Verkehrsteilnehmers, Mittel zur Erzeugung wenigstens einer Alternativinformation zu einer berechneten individuellen Routenführung oder zu der Route eines Verkehrsteilnehmers und Mittel zum Übertragen der wenigstens einen erzeugten Alternativinformation zu dem elektronischen Endgerät des Verkehrsteilnehmers.

9. Rechnereinheit nach Anspruch 8, **dadurch gekennzeichnet, dass** eine Registrierungseinrichtung zur Registrierung der Verkehrssteilnehmer bei der Rechnereinheit und/oder bei einer Verkehrssteilnehmergruppe vorgesehen ist.

10. Rechnereinheit nach Anspruch 8 oder 9, **dadurch gekennzeichnet, dass** der Rechnereinheit ein Bonussystem zugeordnet ist, welches zur Erzeugung von Boni bei einem Empfang einer bestimmbaren Anzahl an Akzeptierungsnachrichten eines Verkehrsteilnehmers ausgebildet ist.

11. Rechnereinheit nach einem der Ansprüche 8 bis 10, **dadurch gekennzeichnet, dass** die Rechnereinheit Mittel zum Durchführen des Verfahrens nach einem der Ansprüche 1 bis 7 aufweist.

## Claims

1. A method for route guidance of traffic participants, wherein the traffic participants have assigned to them electronic terminals for route guidance, saif method comprising the following steps:
- via the electronic terminals, individual route requests or routes are generated from the traffic participants and transmitted to a computer unit,
- in the computer unit based on the individual route requests individual route guidances are calculated for the respective terminals and provided to the respective terminals,
- these calculated individual route guidances and the routes are compared in the computer unit with data from an extended collective traffic model accessed by the computer unit,
- wherein the calculated individual route guidances of all route requests and all routes that have been generated and transmitted to the computer unit, are integrated into a collective traffic model thereby generating the extended collective traffic model,
- in the computer unit, the extended collective traffic model is evaluated for detecting a disturbance or the risk of disturbance on the individual route guidance or the route of each traffic participant,
- and if a particular event is detected on the individual route guidance or the route of a traffic participant, at least one alternative information to the calculated individual route guidance or to the route is generated in the computer unit and transmitted to the electronic terminal of the traffic participant.

2. The method according to claim 1, **characterized in that** as alternative information to the calculated individual route guidance or to the route, another route guidance, a time-shifted route guidance and/or an alternative destination is transmitted to the traffic participant.

3. The method according to claim 1 or 2, **characterized in that** the traffic participants register themselves by means of their electronic terminals in the computer unit to participate in the method at a group of traffic participants.

4. The method according to anyone of Claims 1 to 3, **characterized in that** the traffic participants send to the computer unit an acceptance message in which they indicate that they agree with the alternative information.

5. The method according to claim 4, **characterized in that** in a bonus system of the computer unit a bonus is assigned to a traffic participant, when exceeding a determinable number of acceptance messages.

6. The method according to anyone of claims 1 to 5, **characterized in that** the collective traffic model for calculating the route guidance reverts to a simulated traffic infrastructure and/or to current traffic situations and/or to historical traffic situations.

7. The method according to anyone of claims 1 to 6, **characterized in that** the individual route guidances and the routes are stored anonymously in the computer unit.

8. A computer unit of a route guidance system for route guidance of traffic participants, comprising an interface for receiving individual route requests and routes transmitted from electronic terminals of the traffic participants to the computer unit, means for calculating individual route guidance based on the individual route requests, an interface for accessing a collective traffic model, means for integrating the calculated individual route guidances of all route requests and all received routes into the collective traffic model for generating an extended collective traffic model, a comparator device for comparing a calculated individual route guidance or a route with data from the extended collective traffic model, an evaluation unit for evaluating the extended collective traffic model for identifying a particular event on the individual route guidance or the route of each traffic participant, means for generating at least one alternative information to a calculated individual route guidance or to the route of a traffic participant and means for transmitting the at least one generated alternative information to the electronic terminal of the traffic participant.

9. The computer unit according to claim 8, **characterized in that** a registration device is provided for registering the traffic participants in the computer unit and/or in a traffic participant group.

10. The computer unit according to claim 8 or 9, **characterized in that** a bonus system is assigned to the computer unit, which is adapted to generate bonuses upon receipt of a determinable number of acceptance messages of a traffic participant.

11. The computer unit according to anyone of claims 8 to 10, **characterized in that** the computer unit comprises means for performing the method according to anyone of claims 1 to 7.

## Revendications

1. Procédé servant au guidage sur des itinéraires d'usagers de la route, dans lequel les usagers de la route disposent de terminaux électroniques, qui leur sont affectés, servant au guidage sur des itinéraires, avec les étapes suivantes :
- des demandes d'itinéraire individuelles ou des itinéraires individuels sont générés et sont transmis à une unité de calcul par les usagers de la route par l'intermédiaire des terminaux électroniques,
- dans l'unité de calcul, des guidages individuels sur des itinéraires sont calculés et fournis aux terminaux correspondants à l'aide des demandes d'itinéraire individuelles pour les terminaux correspondants,
- lesdits guidages individuels sur itinéraires calculés et les itinéraires sont comparés dans l'unité de calcul aux données issues d'un modèle de trafic collectif étendu, auquel l'unité de calcul a recours,
- dans lequel les guidages individuels calculés sur des itinéraires de toutes les demandes d'itinéraire et tous les itinéraires générés et transmis à l'unité de calcul sont intégrés dans un modèle de trafic collectif et de ce fait le modèle de trafic collectif étendu est généré,
- dans l'unité de calcul, le modèle de trafic collectif étendu est évalué pour identifier une perturbation ou un risque de perturbation sur le guidage individuel sur des itinéraires ou sur l'itinéraire de chaque usager de la route,
- et en cas d'identification d'un événement défini sur le guidage individuel sur des itinéraires ou sur l'itinéraire d'un usager de la route, au moins une information alternative concernant le guidage individuel calculé sur des itinéraires ou de l'itinéraire est générée dans l'unité de calcul et est transmise à l'usager de la route sur son terminal électronique.

2. Procédé selon la revendication 1, **caractérisé en ce que** sont transmis à un usager de la route, en tant qu'information alternative concernant le guidage calculé individuel sur des itinéraires ou concernant l'itinéraire, un autre guidage sur des itinéraires, un guidage sur des itinéraires décalé dans le temps et/ou une destination alternative.

3. Procédé selon la revendication 1 ou 2, **caractérisé en ce que** les usagers de la route s'enregistrent au moyen de leurs terminaux électroniques dans l'unité de commande pour prendre part au procédé dans le cas d'un groupe d'usagers de la route.

4. Procédé selon l'une quelconque des revendications 1 à 3, **caractérisé en ce que** les usagers de la route envoient à l'unité de calcul un message d'acceptation, dans lequel ils indiquent être d'accord avec l'information alternative.

5. Procédé selon la revendication 4, **caractérisé en ce que** dans un système de bonus de l'unité de calcul, un bonus est attribué à un usager de la route en cas de dépassement d'un nombre pouvant être prédéfini en messages d'acceptation.

6. Procédé selon l'une quelconque des revendications 1 à 5, **caractérisé en ce que** le modèle de trafic collectif servant à calculer le guidage sur des itinéraires a recours à une infrastructure de trafic simulée et/ou à des situations de trafic instantanées et/ou à des situations de trafic historiques.

7. Procédé selon l'une quelconque des revendications 1 à 6, **caractérisé en ce que** les guidages sur des itinéraires individuels et les itinéraires sont enregistrés de manière anonyme dans l'unité de calcul.

8. Unité de calcul d'un système de guidage sur des itinéraires servant au guidage sur des itinéraires d'usagers de la route, présentant une interface servant à recevoir des demandes d'itinéraire individuelles et des itinéraires, qui sont transmis par des terminaux électroniques des usagers de la route à l'unité de calcul, des moyens servant à calculer des guidages individuels sur des itinéraires du fait des demandes d'itinéraire individuelles, une interface servant à avoir recours à un modèle de trafic collectif, des moyens servant à intégrer des guidages individuels calculés sur des itinéraires de toutes les demandes d'itinéraire et de tous les itinéraires reçus dans le modèle de trafic collectif, un dispositif comparateur servant à comparer un guidage calculé individuel sur des itinéraires ou un itinéraire à des données issues du modèle de trafic collectif étendu, une unité d'évaluation servant à évaluer le modèle de trafic collectif étendu pour identifier un événement défini sur le guidage individuel sur des itinéraires ou sur l'itinéraire de chaque usager de la route, des moyens servant à générer au moins une information alternative concernant un guidage calculé individuel sur des itinéraires ou concernant l'itinéraire d'un usager de la route et des moyens servant à transférer l'au moins une information alternative générée concernant le terminal électronique de l'usager de la route.

9. Unité de calcul selon la revendication 8, **caractérisée en ce qu'**est prévu un dispositif d'enregistrement servant à enregistrer les usagers de la route auprès de l'unité de calcul et/ou auprès d'un groupe d'usagers de la route.

10. Unité de calcul selon la revendication 8 ou 9, **caractérisée en ce qu'**est associé à l'unité de calcul un système de bonus, qui est réalisé pour générer des bonus lors d'une réception d'un nombre pouvant être défini de messages d'acceptation d'un usager de la route.

11. Unité de calcul selon l'une quelconque des revendications 8 à 10, **caractérisée en ce que** l'unité de calcul présente des moyens servant à mettre en oeuvre le procédé selon l'une quelconque des revendications 1 à 7.
